(19) Europäisches Patentamt
European Patent Office
Office européen des brevets

(11) Publication number: 0 292 306
A2

(12) **EUROPEAN PATENT APPLICATION**

(21) Application number: 88304584.1

(51) Int. Cl.[4]: **C 08 G 12/30**

(22) Date of filing: 20.05.88

(30) Priority: 20.05.87 JP 121338/87
30.07.87 JP 188992/87
30.10.87 JP 273271/87

(43) Date of publication of application:
23.11.88 Bulletin 88/47

(84) Designated Contracting States:
CH DE FR GB IT LI

(71) Applicant: Nippon Shokubai Kagaku Kogyo Co., Ltd
1, 5-chome, Koraibashi Higashi-ku
Osaka-shi Osaka-fu 541 (JP)

(72) Inventor: Yatagai, Hidetaka
23-2, Koushienguchi 3-chome
Nishinomiya-shi Hyogo-ken (JP)

Iriguchi, Jiro
5-1-105, Nishimachi
Takatsuki-shi Osaka-fu (JP)

Yamada, Souichi
63, Uchihatacho
Takeda Fushimi-ku Kyoto-shi Kyoto-fu (JP)

Takaya, Tsuguo
13-29, Ohira 2-chome
Otsu-shi Shiga-ken (JP)

(74) Representative: Kearney, Kevin David Nicholas et al
KILBURN & STRODE 30 John Street
London, WC1N 2DD (GB)

(54) **Methylolaminotriazine condensates and method for production thereof.**

(57) A methylolaminotriazine condensate possessing a repeating unit represented by the formula I:

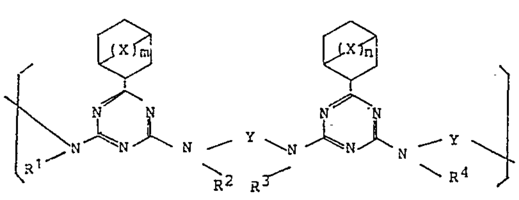

(I)

wherein X is $CH_2$, m and n are independently 0 or 1, Y is $CH_2$ or $CH_2OCH_2$, and $R^1$, $R^2$, $R^3$, and $R^4$ are independently H, $CH_2OH$, or $CH_2OR^5$, where $R^5$ is a lower alkyl group, providing that $R^2$ and $R^3$ may jointly form Y.

FIG. I

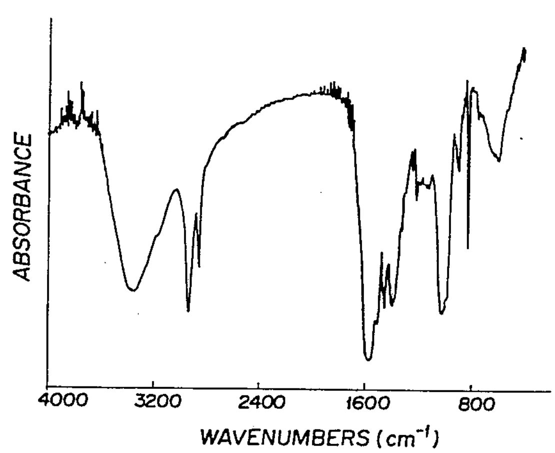


EP 0 292 306 A2

## Description

### METHYLOLAMINOTRIAZINE CONDENSATES AND METHOD FOR PRODUCTION THEREOF

This invention relates to methylolaminotriazine compounds, especially polymers thereof, and condensates and a method for the production thereof.

Aminotriazine resin compositions have found extensive utility as thermosetting resins in molding materials, laminates, wiring boards, fibre processing agents, for example.

As aminotriazine resin compositions, those melamine resin compositions, benzoguanamine resin compositions, and acetoguanamine resin compositions which are obtained by the reaction of triazines such as melamine, benzoguanamine, and acetoguanamine with formaldehyde and optionally further with an alcohol have been known to the art. They have merits and demerits of their own.

The melamine resin compositions, for example, are thermosetting resins excellent in weather resistance, heat resistance, water resistance, and insulating properties and, owing to these characteristic properties, find popular utility in molding materials and laminates. They have a disadvantage that they set quickly and exhibit poor stability in storage because they possess three amino groups in the triazine ring and the thermosetting products thereof are rigid and brittle because they have high cross-linking density. The acetoguanamine resin compositions are superior in flexibility to the melamine resin compositions. Their flexibility, however, is not perfectly satisfactory and their water resistance is rather poor. In contrast, the benzoguanamine resin compositions are produced with improved quality as in stability in storage and flexibility of molded articles. They nevertheless have a disadvantage that they succumb to discolouration on exposure to ultraviolet light and suffer from inferior light stability.

Cyclohexanecarboguanamine and norbornane carboguanamine and copolycondensates thereof with melamine have been known to the art. Further the usability of these copolycondensates as molding materials has been also known to the art (U.S.P. 3,379,661). Cyclohexenecarboguanamine and methylol compounds thereof have been known to the art (DE-1,071,336) and the usability of copolycondensates of cyclohexenecarboguanamine as molding materials and coating materials has been known in the art (Japanese Patent Publication SHO 41(1966)-223). Norbornenecarboguanamine [2,4-diamino-6-(2′,5′-endo-methylene - $\Delta^{3'}$ -cyclohexenyl)-S-triazine], methylol compounds thereof, and etherified methylol compounds thereof have been known to the art (Japanese Patent Publication SHO 40(1965)-2,353 and Japanese Patent Laid-Open SHO 49(1974)-5,469) and the usability thereof as molding materials has been also known to the art (Japanese Patent Publication SHO 40(1965)-2,353). The molding materials using copolycondensates of methylolguanamines (methylolaminotriazines) and methylolmelamine or condensates of methylolnorbornenecarboguanamine, however, have a disadvantage that they are deficient in heat resistance, light stability, mechanical strength, and product quality. An object of this invention, therefore, is to provide novel methylolaminotriazine condensates and a method for the production thereof.

The object described above is accomplished by methylolaminotriazine condensates having a repeating unit represented by the formula I:

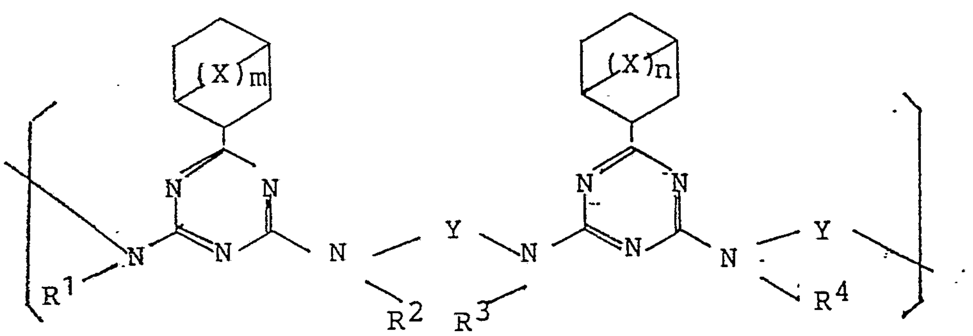

(I)

wherein for each independent repeating unit X represents a $CH_2$ group, each of m and n are independently 0 or 1, Y represents a $CH_2$ or $CH_2OCH_2$ group, and each of $R^1$, $R^2$, $R^3$, and $R^4$ independently represents a hydrogen atom or a $CH_2OH$ or $CH_2OR^5$ group, where $R^5$ represents a lower alkyl group, providing that $R^2$ and $R^3$ may jointly form Y. The variables m and n may be the same or different from each other.

The object described above may be further accomplished by a method for the production of a methylolaminotriazine condensate having a repeating unit represented by the formula I, which method comprises causing 1 mol of a carboguanamine represented by the formula II:

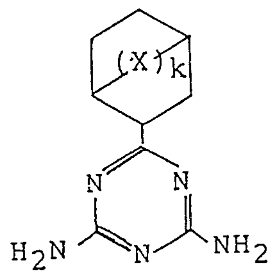

(II)

wherein X is $CH_2$ and k is 0 or 1, to react with 1.5 to 10 mols of formaldehyde in at least one solvent selected from the group consisting of water and alcohols at a pH value in the range of 3 to 10 at a reaction temperature in the range of 50° to 150°C.

The methylolaminotriazine condensates in accordance with the present invention are the condensates with formaldehyde possessing a repeating unit represented by the formula I, wherein X represents a $CH_2$ group, m and n are independently 0 or 1, Y represents a $CH_2$ group or a $CH_2OCH_2$ group, and $R^1$, $R^2$, $R^3$, and $R^4$ each independently represent a hydrogen atom or a $CH_2OH$, or $CH_2OR^5$ group where $R^5$ represents an alkyl group of 1 to 6 carbon atoms, preferably 1 to 4 carbon atoms, providing that $R^2$ and $R^3$ may jointly form Y. When at least two of $R^1$, $R^2$, $R^3$ and $R^4$ are $CH_2OR^5$, $R^5$ may be an alkyl group, preferably a $C_1$-$C_6$alkyl group, which may be the same or different.

The methylolaminotriazine condensates of this invention possess repeating units represented by the formula (I). The condensates may possess the same or different repeating units. The presence of such condensates as described above can be confirmed by analyzing a $^{13}$C-NMR spectrum of a given sample. This analysis relies on identifying the various methylene groups originating in formaldehyde indicated in formula I by means of chemical shift. For the purpose of this identification, the data obtained of melamine resin compositions and reported in the literature [J. Polym. Sci, Polym. Chem. Ed., 17, 3205 (1979)] offer useful information. The weight-average molecular weights of methylolaminotriazine condensates in accordance with the present invention can be determined by analyzing a sample by gel permeation chromatography (hereinafter referred to as "GPC" for short).

The methylolaminotriazine condensates of the present invention, when their degrees of condensation are unduly large, acquire so large weight-average molecular weights that they will not easily dissolve in organic solvents and will be usable as thermosetting resin only with difficulty. They are, therefore, desired to have weight-average molecular weights as determined by GPC in the range of 450 to 5,000, preferably of 450 to 3,000.

The methylolaminotriazine condensates of the present invention exhibit ample compatibility with organic solvents and other resins so long as their weight-average molecular weights are not more than 5,000. When they require to be dissolved in a large amount in an alkyl resin or acrylic resin used as a cross-linking agent, they are desired to have the aforementioned methylol group thereof contained therein in the form of the same or different alkyl-etherified form. The alkyl group in the alkyl-etherification is preferred to be at least one lower alkyl having 1 to 6, preferably 1 to 4, carbon atoms.

The methylolaminotriazine condensates of the present invention can be produced by causing 1 mol of a carboguanamine represented by the formula II, namely cyclohexanecarboguanamine and/or norbornanecarboguanamine, to react with 1.5 to 10 mols, preferably 1.5 to 5 mols, of formaldehyde in at least one solvent selected from the group consisting of water and alcohols, at a pH value in the range of 3 to 10 at a reaction temperature in the range of 50° to 150°C.

In the production of the methylolaminotriazine condensates of the present invention, first the reaction of the carboguanamine with formaldehyde forms a methylol compound and subsequently the condensation of this methylol compound gives rise to a methylolaminotriazine condensate polymer having a repeating unit represented by the formula I. The reaction for the formation of the methylol compound proceeds rapidly at a pH value in the range of 3 to 10 and a temperature in the range of 50° to 90°C. The condensation proceeds slowly under basic conditions. It is, therefore, preferred to be carried out under acidic conditions having a pH value in the range of 3 to 7 at a temperature in the range of 50° to 150°C. While these reactions can be carried out under normal pressure, increased pressure, or reduced pressure, the reaction of condensation is enabled to proceed smoothly when it is carried out under reduced pressure or normal pressure while the water formed by the reaction is continuously removed by means of distillation. The condensation may be effected by using an appropriate solvent capable of forming an azeotrope with water.

For the production of the methylolaminotriazine condensates of the present invention, the carboguanamine and formaldehyde are either heated under acidic conditions having a pH value in the range of 3 to 7 at a temperature in the range of 50° to 150°C to undergo the reaction for the formation of the methylol compound and the reaction for the condensation or first treated under basic conditions having a pH value in the range of 7 to 10 to undergo the reaction for the formation of the methylol compound and subsequently heated under acidic conditions having a pH value in the range of 3 to 7 at a temperature in the range of 50° to 150°C to undergo the reaction for the condensation. The condensation reaction easily proceeds under the reaction

conditions of high temperature, low pH value, long duration, and continuous removal of the water from the reaction system by distillation. Thus, the condensate of a desired weight-average molecular weight can be produced by properly selecting these reaction conditions thereby adjusting the progress of the condensation reaction. The purpose of adjusting the condensation reaction and obtaining the methylolaminotriazine condensates with a desired weight-average molecular weight, therefore, is conveniently accomplished by bringing the reaction for the formation of the methylol compound to completion under basic conditions and subsequently acidifying the reaction solution and allowing the condensation reaction to ensue under the suitably selected reaction conditions. The extent to which the condensation reaction has proceeded can be confirmed based on the weight-average molecular weight to be determined by means of GPC. The acidification of the reaction solution can be attained by any of the known methods such as, for example, addition of an acidic substance, use of a buffer solution, and utilization of the phenomenon of spontaneous fall of pH value during the course of the reaction. In the production of the methylolaminotriazine condensates of the present invention, when the methylol group of the condensate is preferred to be in an alkyl-etherified form, the condensate is obtained by carrying out the reactions by the methods described above in the presence of at least one alcohol. For the alkyl-etherification to proceed with high efficiency, the carboguanamine and formaldehyde are desired to be heated under acidic conditions having a pH value in the range of 3 to 7 in the presence of at least one alcohol. In this case, the alkyletherification proceeds quite efficiently when the reactions are carried out with at least one alcohol as a sole solvent as when an alcohol solution of formaldehyde is used in the reaction system. When water and the alcohol are used as a mixed solvent, the alkyletherification can be effected as efficiently as described above by continuously removing only the water from the reaction system by distillation during the course of the reaction. Even in the reactions using the alcohol as a sole solvent, the water produced by the etherification in the reaction system may be removed by distillation. It is permissible to carry out the reactions of the carboguanamine and formaldehyde by the aforementioned methods in water as a solvent, then remove the water from the reaction system by distillation under a vacuum or normal pressure, and thereafter heat the remaining reaction solution in the added alcohol under acidic conditions having a pH value in the range of 3 to 7. The extent to which the etherification has proceeded can be confirmed, as described above, based on the $^{13}C$-NMR of the product of the reaction. The alcohol to be used for the etherification is desired to be at least one alcohol having a lower alkyl group of 1 to 6, preferably 1 to 4, carbon atoms.

The product of these reactions is generally obtained in the form of a mixture of the methylolaminotriazine condensates aimed at by this invention with methylolaminotriazine compound. The ratio of the components of this mixture can be freely adjusted by the reaction conditions to suit the particular use for which the product is intended. The product consequently obtained can be put to use in its unmodified form. Optionally, the methylolaminotriazine condensates can be solely obtained as by separation from this mixture by GPC, for example.

Aqueous solution of formaldehyde available in the market, alcohol solutions of formaldehyde, such formaldehyde polymers as paraformaldehyde and trioxane, and gaseous formaldehyde can be cited as typical examples of the formaldehyde usable in this invention. In terms of convenience of use, the aqueous solution of formaldehyde, an alcohol solution of formaldehyde, or paraformaldehyde proves to be desirable. Desirably, the amount of formaldehyde to be used is in the range of 1.5 to 10 mols, preferably 1.5 to 5 mols, per mol of the carboguanamine. If the amount is less than 1.5 mols, the reaction for the formation of the methylol compound does not proceed sufficiently and the methylolaminotriazine condensates consequently obtained do not exhibit sufficient compatibility with organic solvents or other resins. If the amount exceeds 10.0 mols, the efficiency of the reaction for the formation of the methylol compound is not improved proportionately to the extra amount and the reaction itself proves to be uneconomical because it only suffers from inevitable occurrence of unaltered formaldehyde.

The methylolaminotriazine condensates of the present invention exhibit high compatibility with organic solvents and other resins and are dissolved thoroughly in alcohols such as methanol and ethanol and ketones such as acetone. They are dissolved as sufficiently in mixed solvents of benzene, toluene, and xylene with such alcohols or ketones as mentioned above. Further, the methylolaminotriazine condensates of the present invention exhibit very high stability of storage at normal room temperature such, that is, show no sign of increase in viscosity or rigidity even after protracted standing.

The methylolaminotriazine condensates obtained by the present invention can be used as a molding material. The products obtained by the use of this molding material excel in flexibility, insulating properties, water resistance, heat resistance, light stability, and surface gloss. The methylolaminotriazine condensates can be used also as a material for minute beads. They are also useful as a modifier for polyacetal.

The invention may be put into practice in a number of ways and certain specific embodiments will be described to illustrate the invention with reference to the accompanying examples and drawings, in which:

Figures 1 to 9 are infrared absorption spectrums of methylolaminotriazine condensates in accordance with the present invention; and

Figure 10 illustrates a specimen which uses a test for resistance to cracking by insert as set out below with reference to Table 2 of the present application.

It should be noted, however, that this invention is not limited to these examples.

The determination of $^{13}C$-NMR, the confirmation of structure, and the determinations of GPC and HPLC as mentioned in the following working examples were carried out as follows. (1) Determination of $^{13}C$-NMR and

confirmation of structure:

By the use of an apparatus produced by Varian Corp. and marketed under the product code "XL-300", a sample dissolved in dimethyl sulphoxide-$d_6$ and placed in a test tube 5 mm in diameter was subjected to the determination. The determination was carried out at room temperature under the condition of complete proton irradiation.

From the spectra of methylolaminotriazine condensates obtained in the working examples, various methylene groups originating in formaldehyde were confirmed as shown in Table 1.

The chemical shifts given in Table 1 were indicated with reference to tetramethyl silane. (2) The determination of GPC was carried out by the use of the following apparatus and solvent:
Pump: Waters 510
Sensor: Waters 410 (differential refractometer)
Column: Three columns of 500 A, 100 A, and $10^6$, Waters ultrastyragel Linear, interconnected and kept at a column temperature of 40°C.
Data processing device: Waters 720
Developing solvent: Tetrahydrofuran.

The data on the weight-average molecular weight given in Table 1 were obtained from a calibration curve drawn with respect to the relation between the amount of developing solvent and the molecular weight using polystyrene of a known molecular weight as a standard sample. (3) The determination of HPLC was carried out by the use of the following apparatus, reagent, and conditions:
Apparatus: Product of Shimadzu Seisakusho Ltd. marketed under the product code "LC-6A"
Column: Product of Nakarai Kagaku Yakuhin K.K. marketed under the trademark designation "Cosmosil 5C18"
Test wavelength: 215 nm
Developing solvent: Mixed solvent of aqueous 0.1 wt% phosphoric acid solution/methanol.

(4) The infrared absorption spectrum was obtained with an apparatus, FT-IR, produced by Nicolet Corp. and marketed under product code of "60SX", using a tablet of KBr.

The aqueous 37 wt% formaldehyde solution mentioned in the following working examples was commercially available formalin (product of Koei Kagaku K.K.) containing methanol as a stabilizer.

## EXAMPLE 1

In a three-neck flask provided with a reflux condenser, a stirrer, and a thermometer, 100 g (0.52 mol) of cyclohexanecarboguanamine, 0.33 g of an aqueous 10 wt% sodium carbonate solution, and 127 g (1.57 mols) of an aqueous 37 wt% formaldehyde solution were stirred and heated. When the reaction temperature rose to 75°C within 10 minutes of starting the heating, the reaction solution was homogeneous and had a pH value of 8.3. The analysis of a sample of the reaction solution by HPLC revealed that the cyclohexanecarboguanamine was substantially completely consumed in the reaction.

When the reaction solution was heated to and kept at 90°C and refluxed and stirred to initiate condensation, it gradually became opaque. When the reaction solution showed a pH value of 6.2 within four hours of starting the condensation, it was heated up to 120°C and the unaltered formaldehyde and water were removed by distillation to produce a colourless transparent methylolaminotriazine condensate composition. On analysis by GPC, this methylolaminotriazine condensate composition was found to contain a methylolaminotriazine compound and a methylolaminotriazine condensate at a ratio of 60:40. By removing the methylolaminotriazine compound by GPC from this composition, there was obtained the methylolaminotriazine condensate (I). The analysis of a sample of this condensate (I) by $^{13}C$-NMR and GPC gave the results shown in Table 1. The infra-red absorption spectrum of this condensate (I) is shown in Figure 1.

## EXAMPLE 2

In a three-neck flask provided with a reflux condenser, a stirrer, and a thermometer, 100 g (0.52 mol) of cyclohexanecarboguanamine, 0.33 g of an aqueous 10 wt% sodium carbonate solution, and 127 g (1.57 mols) of an aqueous 37 wt% formaldehyde solution were stirred and heated until the reaction temperature rose to 90°C. The stirring was continued at 90°C for two hours. Then, the reaction temperature was elevated to 100°C and water and the unaltered formaldehyde were removed from the reaction solution by distillation over a period of four hours. The reaction solution was further heated at 120°C to expel the remaining formaldehyde and water by distillation and produce a colourless transparent methylolaminotriazine condensate composition (II). On analysis by GPC, this methylolaminotriazine condensate composition was found to contain a methylolaminotriazine compound and a methylolaminotriazine condensate in a ratio of 20:80. By removing the methylolaminotriazine compound by GPC from this composition, there was obtained the methylolamino triazine condensate (II). The analysis of a sample of this condensate (II) by $^{13}C$-NMR and the GPC gave the

results shown in Table 1. An infrared absorption of this condensate (II) is also shown in Figure 2.

EXAMPLE 3

In a three-neck flask provided with a reflux condenser, a stirrer, and a thermometer, 100 g (0.49 mol) of norbornanecarboguanamine, 0.33 g of an aqueous 10 wt% sodium carbonate solution, and 79 g (0.97 mol) of an aqueous 37 wt% formaldehyde solution were stirred and heated until the reaction temperature rose to 90°C. The reaction solution became homogeneous within 10 minutes of the reaction temperature reaching 90°C.

The reaction solution was then kept at 90°C for two hours for further reaction. The reaction temperature was elevated to 100°C and the unaltered formaldehyde and water were removed from the reaction solution by distillation over a period of four hours. The reaction temperature was raised to 120°C and the remaining water and formaldehyde were expelled by distillation to obtain a colourless transparent methylolaminotriazine compound and a methylolaminotriazine condensate in a ratio of 50:50. By removing the methylolaminotriazine compound by GPC from this composition, there was obtained the methylolaminotriazine condensate (III). The analysis of a sample of this condensate by $^{13}C$-NMR and GPC gave the results shown in Table 1. The infrared spectrum of this condensate (III) is also shown in Figure 3.

EXAMPLE 4

In a three-neck flask provided with a reflux condenser, a stirrer, and a thermometer, 100 g (0.52 mol) of cyclohexanecarboguanamine, 58.5 g (1.56 mols) of 80 wt% paraformaldehyde powder, 58.5 g of water, and 0.33 g of an aqueous 10 wt% sodium carbonate solution were stirred and heated until the reaction temperature rose to 90°C. The reaction solution became homogeneous and showed a pH value of 8.3 within 10 minutes of the reaction temperature reaching 90°C. The analysis of a sample of the reaction solution by HPLC revealed that the cyclohexanecarboguanamine was substantially completely consumed in the reaction.

When the reaction solution was kept at 100°C and refluxed and stirred to initiate condensation, it gradually became opaque. When the reaction solution showed a pH value of 6.2 within two hours of starting the condensation, it was raised up to 120°C and the unaltered formaldehyde and water were removed from the reaction solution by distillation under normal pressure to produce a colourless transparent methylolaminotriazine condensate composition. On analysis by GPC, this methylolaminotriazine condensate composition was found to contain a methylolaminotriazine compound and a methylolaminotriazine condensate in a ratio of 43:57. By removing the methylolaminotriazine compound by GPC from this composition, there was obtained the methylolaminotriazine condensate (IV). The analysis of a sample of this condensate by $^{13}C$-NMR and GPC gave the results shown in Table 1. The infrared spectrum of this condensate (IV) is also shown in Figure 4.

EXAMPLE 5

In a three-neck flask provided with a reflux condenser, a stirrer, and a thermometer, 100 g (0.52 mol) of cyclohexanecarboguanamine, 0.33 g of an aqueous 10 wt% sodium carbonate solution, and 127 g (1.57 mols) of an aqueous 37 wt% formaldehyde solution were stirred and heated to 90°C. After 30 minutes' reaction at 90°C, the reaction solution and 60 g of xylene added thereto were further heated to expel the formed water by distillation. After the distillation, the remaining reaction solution was cooled to 65°C, combined with 270 g of methanol, and adjusted to pH 5 by addition of an aqueous 6N hydrochloric acid solution. Then, the resultant reaction solution was refluxed and stirred for one hour and a half, adjusted to pH 7 by addition of an aqueous sodium carbonate solution, and distilled to expel the methanol and xylene therefrom and produce a solution of methylolaminotriazine condensate composition having a nonvolatile content of 80 wt%. On analysis by GPC, this methylolaminotriazine condensate composition was found to contain a methylolaminotriazine compound and a methylolaminotriazine condensate in a ratio of 80:20. By removing the methylolaminotriazine compound by GPC from this composition, there was obtained the methylolaminotriazine condensate (V). The analysis of a sample of this condensate by $^{13}C$-NMR and GPC gave the results shown in Table 1. The infrared absorption spectrum is also shown in Figure 5.

EXAMPLE 6

A solution of a methylolaminotriazine condensate composition having a nonvolatile content of 60 wt% was obtained by following the procedure of Example 5, except that 100 g (0.49 mol) of norbornanecarboguanamine was used in the place of 100 g (0.52 mol) of cyclohexanecarboguanamine. On analysis by GPC, this methylolaminotriazine condensate composition was found to contain a methylolaminotriazine compound and a methylolaminotriazine condensate in a ratio of 85:15. By removing the methylolaminotriazine compound by GPC from the composition, there was obtained the methylolaminotriazine condensate (VI). The analysis of a

sample of this condensate by $^{13}C$-NMR and GPC gave the results shown in Table 1. The infrared absorption spectrum of this condensate (VI) is also shown in Figure 6.

## EXAMPLE 7

In a three-necked flask provided with a reflux condenser, a stirrer, and a thermometer, 100 g (0.52 mol) of cyclohexanecarboguanamine, 136 g (2.09 mols) of 46 wt% methanol solution of formaldehyde, and 180 g of methanol were stirred and the resultant reaction solution was adjusted to pH 5 by addition of an aqueous 6N hydrochloric acid solution. The reaction solution was stirred and heated and refluxed for further reaction for one hour. At the end of the reaction, the reaction solution was adjusted to pH 7 by addition of an aqueous sodium carbonate solution and then distilled to expel the methanol and produce a solution of methylolaminotriazine condensate composition having a non-volatile content of 80 wt%. On analysis by GPC, this methylolaminotriazine condensate composition was found to consist of a methylolaminotriazine compound and a methylolaminotriazine condensate in a ratio of 87:13. By removing the methylolaminotriazine compound by GPC from this composition, there was obtained the methylolaminotriazine condensate (VII). The analysis of a sample of this condensate by $^{13}C$-NMR and GPC gave the results shown in Table 1. The infrared absorption spectrum is also shown in Figure 7.

## EXAMPLE 8

In a three-neck flask provided with a reflux condenser, a stirrer, and a thermometer, 100 g (0.52 mol) of cyclohexanecarboguanamine, 0.33 g of an aqueous 10 wt% sodium carbonate solution, and 127 g (1.57 mols) of an aqueous 37 wt% formaldehyde solution were stirred and heated until the reaction temperature rose to 90°C.

The stirring was continued at 90°C for two hours. Then, the reaction solution was raised to 100°C and distilled for four hours to expel water and the unaltered formaldehyde therefrom. The remaining reaction solution was further heated up to 120°C to expel the remaining formaldehyde and water. The reaction solution which remained was cooled to 50°C, combined with 250 g of methanol, adjusted to pH 5 by addition of an aqueous 6N hydrochloric acid solution, and refluxed and stirred for one hour.

After completion of the reaction the reaction solution was adjusted to pH 7 by addition of an aqueous sodium carbonate solution and then distilled for expulsion of the methanol to produce a solution of methylolaminotriazine condensate composition having a nonvolatile content of 70 wt%. On analysis by GPC, this methylolaminotriazine condensate composition was found to contain a methylolaminotriazine compound and a methylolaminotriazine condensate in a ratio of 20:80. By removing the methylolaminotriazine compound by GPC from the composition, there was obtained the methylolaminotriazine condensate (VIII). The analysis of a sample of the condensate by $^{13}C$-NMR and GPC gave the results shown in Table 1. The infrared absorption spectrum is also shown in Figure 8.

## EXAMPLE 9

In a three-neck flask provided with a reflux condenser, a stirrer, and a thermometer, 100 g (0.52 mol) of cyclohexanecarboguanamine, 58.5 g (1.56 mols) of 80 wt% paraformaldehyde and 116 g (1.57 mols) of n-butanol were mixed and adjusted to pH 5 by addition of an aqueous 6N hydrochloric acid solution. The reaction solution was heated and stirred and refluxed for three hours. Then, the reaction solution was heated under normal pressure until the reaction temperature rose to 130°C to expel the n-butanol by distillation and produce a solution of methylolaminotriazine condensate composition having a nonvolatile content of 80 wt%. On analysis by GPC, this methylolaminotriazine condensate composition was found to contain a methylolaminotriazine compound and a methylolaminotriazine condensate in a ratio of 30:70. By removing the methylolaminotriazine compound by GPC from the composition, there was obtained the methylolaminotriazine condensate (IX). The analysis of a sample of this condensate by $^{13}C$-NMR and GPC gave the results shown in Table 1. The infrared absorption spectrum is also shown in Figure 9.

Table 1

| Methylene group | Structural formula | | Chemical Shift (ppm) | Methylolaminotriazine condensate (I) | (II) | (III) | (IV) | (V) | (VI) | (VII) | (VIII) | (IX) |
|---|---|---|---|---|---|---|---|---|---|---|---|---|
| Methylene diamine | $-NHCH_2NH-$ | | 47 | n.d. | trace | n.d. | n.d. | n.d. | n.d. | n.d. | trace | n.d. |
| | $-N(CH_2-)CH_2NH-$ | | 52 - 52.5 | n.d. | trace | n.d. | n.d. | n.d. | n.d. | n.d. | trace | n.d. |
| Methylol | $-NHCH_2OH$ | | 64.5 - 65.5 | obs. | obs. | obs. | obs. | obs. | obs. | obs. | obs. | obs. |
| | $-N(CH_2-)CH_2OH$ | | 68 - 69 | obs. | obs. | obs. | obs. | obs. | obs. | obs. | obs. | obs. |
| Etherified methylol | $-NHCH_2OR$ | R:methyl group | 72 - 73 | trace | trace | trace | n.d. | obs. | obs. | obs. | obs. | - |
| | | R:n-butyl group | 70.5 - 71.5 | - | - | - | - | - | - | - | - | obs. |
| | $-N(CH_2-)-CH_2OR$ | R:methyl group | 75.5 - 77.5 | trace | trace | trace | n.d. | obs. | obs. | obs. | obs. | - |
| | | R:n-butyl group | 73.5 - 75.0 | - | - | - | - | - | - | - | - | obs. |
| Dimethylene ether | $-NHCH_2OCH_2NH-$ | | 68 - 69 | obs. | obs. | obs. | obs. | obs. | obs. | obs. | obs. | obs. |
| | $-N(CH_2-)CH_2OCH_2NH-$ | | 73 - 74 | obs. | obs. | obs. | obs. | trace | trace | trace | obs. | obs. |
| n and m in Formula I | | | | n,m=0 | n,m=0 | n,m=1 | n,m=0 | n,m=0 | n,m=1 | n,m=0 | n,m=0 | n,m=0 |
| Weight-average molecular weight | | | | 500 | 1,200 | 550 | 520 | 490 | 600 | 690 | 1,300 | 800 |

* n.d.: not detected

** obs.: observed

EXAMPLE 10

In a kneader, 350 g of the methylolaminotriazine condensate composition obtained by similar method to Example 2 and 150 g of pulp powder were premixed at normal room temperature. In a hot roll heated to 100° C, the premix was kneaded and crushed until the water content resulting from dehydration fell to 3.5%. In a ball mill, 100 g of the crushed premix, 1 g of phthalic anhydride as a curing catalyst, 0.5 g of zinc stearate as a mold release agent, and 1 g of titanium dioxide as a pigment were ground and mixed for 16 hours, to prepare a molding material (1). Another molding material (2) was obtained by following the procedure described above, except that the methylolaminotriazine condensate composition obtained in Example 3 was used instead. These molding materials were tested for properties. The results were as shown in Table 2.

CONTROL 1

In a three-neck flask provided with a reflux condenser, a stirrer, and a thermometer, 100 g (0.52 mol) of cyclohexanecarboguanamine, 65 g (0.52 mol) of melamine, and 270 g (3.33 mols) of an aqueous 37 wt% formaldehyde solution were mixed and the resultant mixture was adjusted to pH 8.0 by addition of an aqueous 5 wt% sodium carbonate solution. The resultant reaction solution was stirred and heated to 95° C and further stirred at this temperature for 40 minutes. It was then cooled to produce an aqueous solution of cyclohexanecarboguanamine/melamine copolycondensate. In a kneader, 100 g of this aqueous solution and 50 g of pulp sheet were mixed at 45° to 55° C for 30 minutes. The resultant mixture was dried in a hot-air drier at 70° C for four hours. A molding material (I) for comparison was obtained by crushing and mixing in a ball mill 100 g of the dried mixture, 0.05 g of phthalic anhydride, 0.5 g of zinc stearate, and 1 g of titanium dioxide for 16 hours. This molding material was tested for properties. The results were as shown in Table 2.

CONTROL 2

A methylolaminotriazine condensate composition for comparison was obtained by repeating the procedure of Example 2, except that 99 g (0.52 mol) of cyclohexenecarboguanamine was used in the place of 100 g (0.52 mol) of cyclohexanecarboguanamine. A molding material (II) for comparison was obtained by following the procedure of Example 10, except that the condensate composition mentioned above was used in the place of the methylolaminotriazine condensate composition of Example 10. The molding material (II) for comparison was tested for properties. The results were as shown in Table 2.

CONTROL 3

A methylolaminotriazine condensate composition for comparison was obtained by repeating the procedure of Example 3, except that 100 g (0.49 mol) of norbornenecarboguanamine was used in the place of 100 g (0.49 mol) of norbornanecarboguanamine. A molding material (III) for comparison was obtained by repeating the procedure of Example 10, except that the condensate composition mentioned above was used in the place of the methylolaminotriazine condensate composition of Example 10. The molding material was tested for properties. The results were as shown in Table 2.

Table 2

| Item of test | Molding material | | | | |
|---|---|---|---|---|---|
| | Example 10 | | Molding material for comparison | | |
| | (1) | (2) | (I) | (II) | (III) |
| Cup molding property | no color shading good | no color shading good | no color shading good | no color shading good | brownish yellowing |
| Resistance to cracking by insert | 40 cycles | 38 cycles | 25 cycles | 35 cycles | 30 cycles |
| Light stability | no changing | no changing | no changing | yellowing | Note 1) |

Note 1) In the case of the molding material (III) for comparison, it was difficult to observe difference because of coloring by heat during the molding.

TEST PROCEDURE

Cup molding property:

This test was carried out by following the procedure of JIS (Japanese Industrial Standard) K-6911-1970.

Resistance to cracking by insert:

A specimen as shown in Figure 10 was molded at a temperature of 150 ± 5° C for 2 to 7 minutes inserting a disc having 50 mm diameter and 4 mm thickness made of mild steel.

The specimen was repeated at a temperature cycle, i.e. at 100° C for 1 hour then at 20° C for 1 hour, to evaluate the number of cycles until cracking was caused.

Light stability:

The specimen molded was irradiated by Fade tester at 100 hours to observe any change in appearance thereof.

It is clearly noted from Table 2 that molding materials obtained from the methylolaminotriazine condensate compositions in accordance with the present invention are improved in appearance, resistance to cracking by insert, and light stability in comparison with the conventional molding materials shown.

**Claims**

1. A compound possessing a repeating unit represented by the formula I:

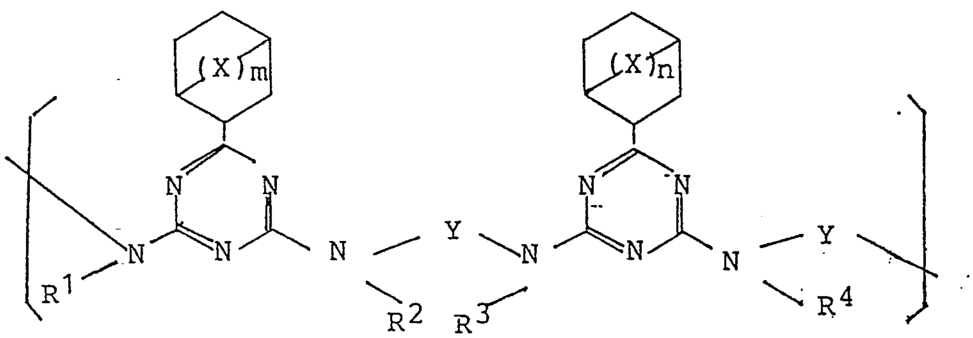

(I)

wherein, for each independent repeating unit, X represents a $CH_2$ group, each of m and n are independently 0 or 1, Y represents a $CH_2$ or $CH_2OCH_2$ group, each of $R^1$, $R^2$, $R^3$, and $R^4$ independently represent a hydrogen atom or a $CH_2OH$ or $CH_2OR^5$ group, where $R^5$ represents a lower alkyl group, providing that $R^2$ and $R^3$ may jointly form Y.

2. A compound as claimed in Claim 1 in which the weight-average molecular weight of the compound determined by gel permeation chromatography is in the range of from 450 to 5,000.

3. A compound as claimed in Claim 1 or 2 in which m and n are both 0 or 1.

4. A compound as claimed in any of Claims 1 to 3, in which each of $R^1$, $R^2$, $R^3$, and $R^4$ independently represent a hydrogen atom or $CH_2OH$ group.

5. A compound as claimed in any of Claims 1 to 4, in which at least one of $R^1$, $R^2$, $R^3$, and $R^4$ represent $CH_2OR^5$ and the remainder thereof each represent a hydrogen atom $CH_2OH$ group.

6. A process for the preparation of a compound having the general formula I:

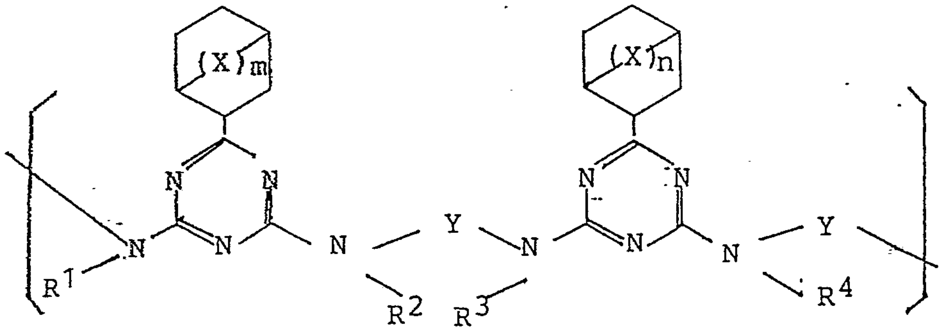

(I)

wherein, for each independent repeating unit, X represents a $CH_2$ group, each of m and n are independently 0 or 1, Y represents a $CH_2$ or $CH_2OCH_2$ group, each of $R^1$, $R^2$, $R^3$, and $R^4$ independently represent a hydrogen atom or a $CH_2OH$ or $CH_2OR^5$ group, where $R^5$ represents a lower alkyl group, providing that $R^2$ and $R^3$ may jointly form Y, the method comprising contacting a carboguanamine represented by the general formula II:

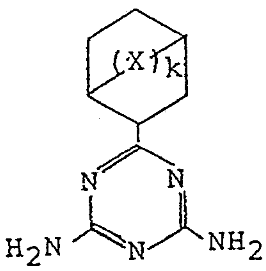

(II)

wherein X represents a $CH_2$ group and k is 0 or 1 with formaldehyde in a molar ratio of from 1:1.5 to 1:10 of compound II to formaldehyde in a solvent which is water or an alcohol or a mixture thereof at a pH value of from 3 to 10 at a temperature in the range of from 50° to 150°C.

7. A process as claimed in Claim 6, in which the weight-average molecular weight of the polymer determined by gel permeation chromatography is in the range of from 450 to 5,000.

8. A process as claimed in Claim 6 or 7, in which the alcohol is an aliphatic alcohol having from 1 to 6 carbon atoms.

9. A process as claimed in any of Claims 6 to 8, in which m and n are both 0 or 1.

10. A process as claimed in any of Claims 6 to 9, in which the solvent is water, an alcohol, or a mixture thereof.

FIG.1

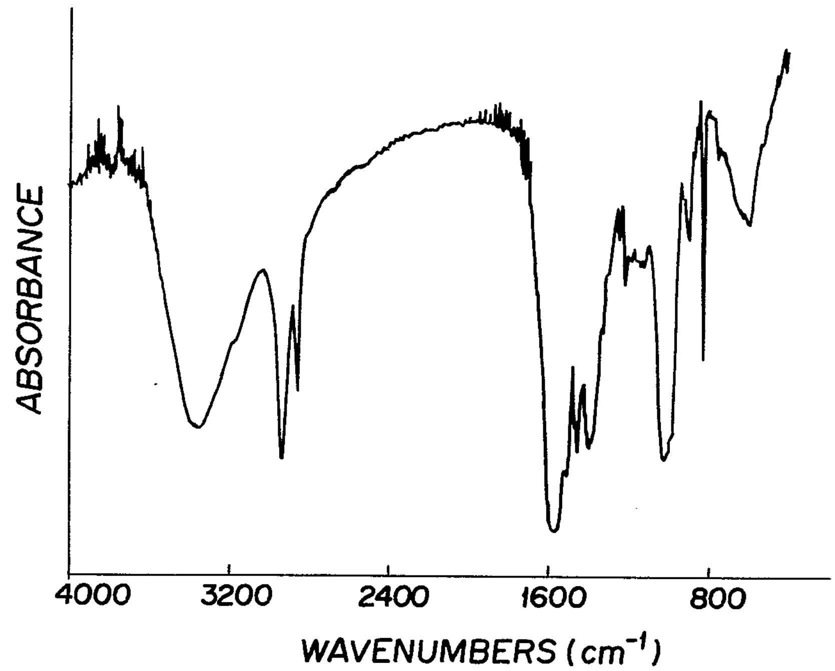
ABSORBANCE
4000
3200
2400
1600
800
WAVENUMBERS (cm⁻¹)

FIG.2

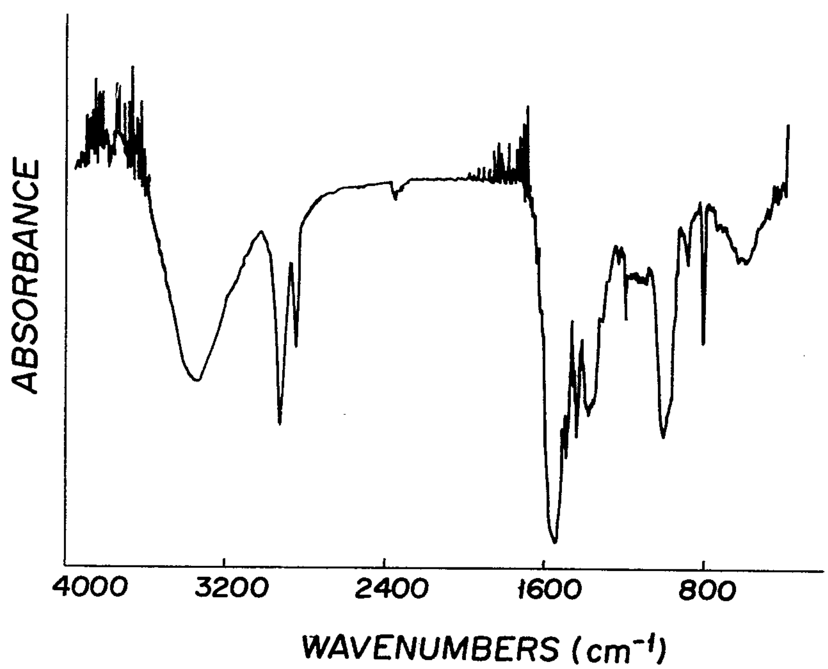
ABSORBANCE
4000
3200
2400
1600
800
WAVENUMBERS (cm⁻¹)

0292306

FIG.3

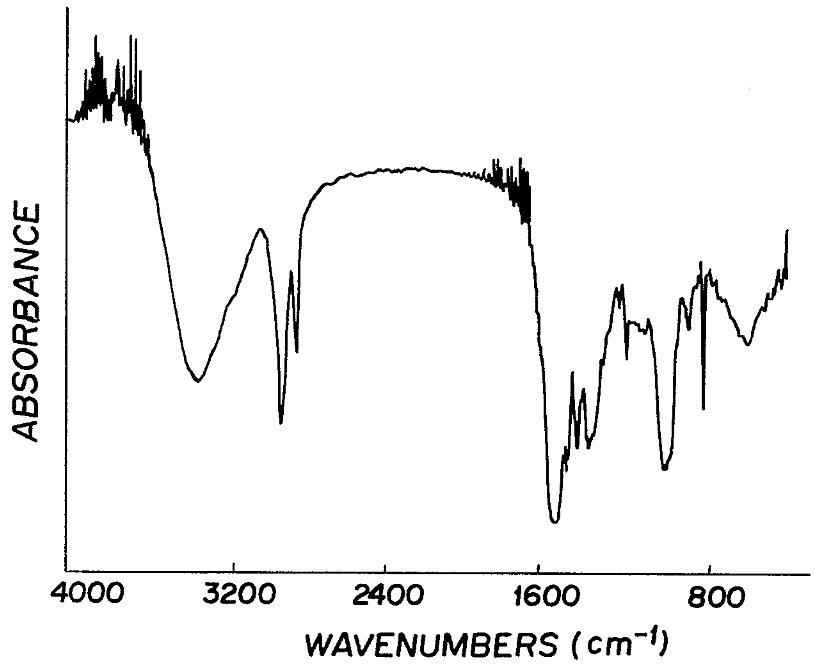


FIG.4

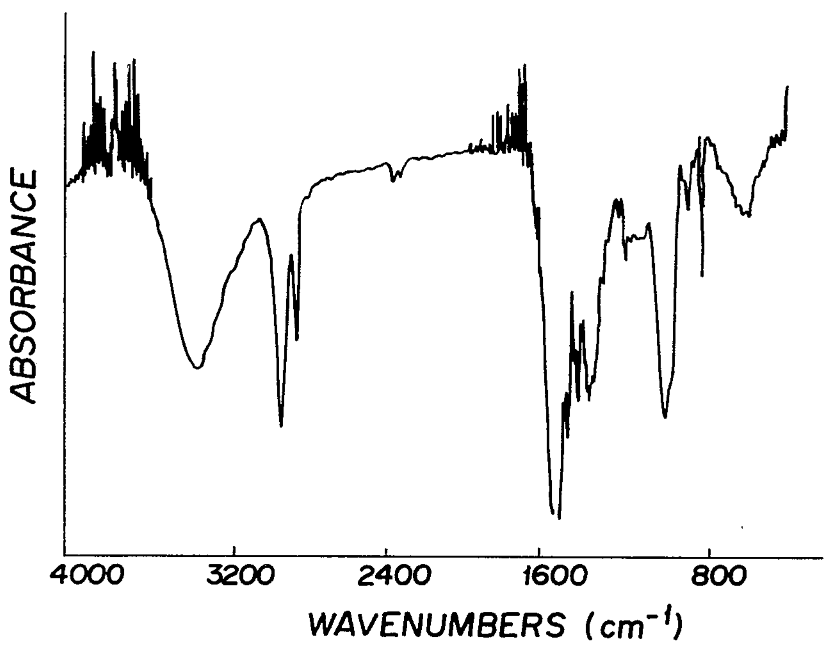

0292306

FIG.5

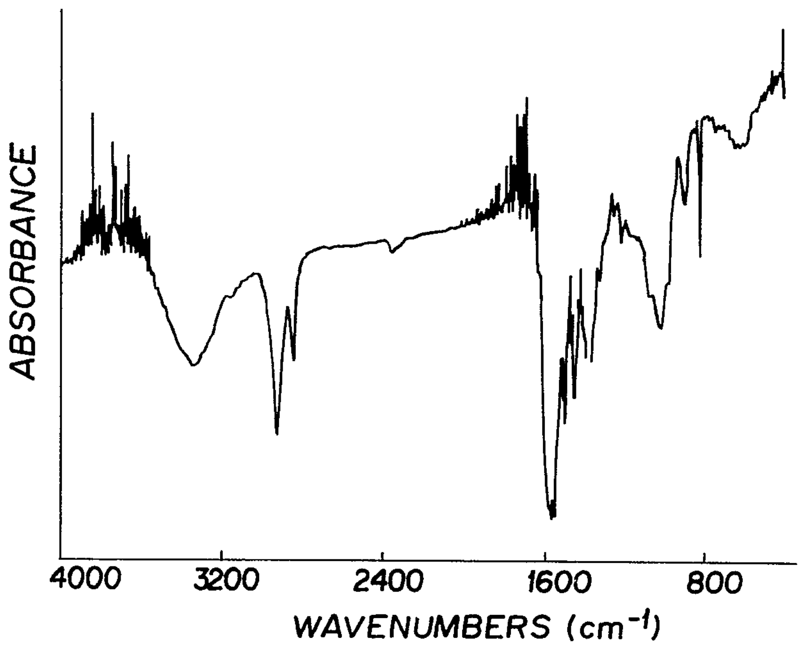


FIG.6

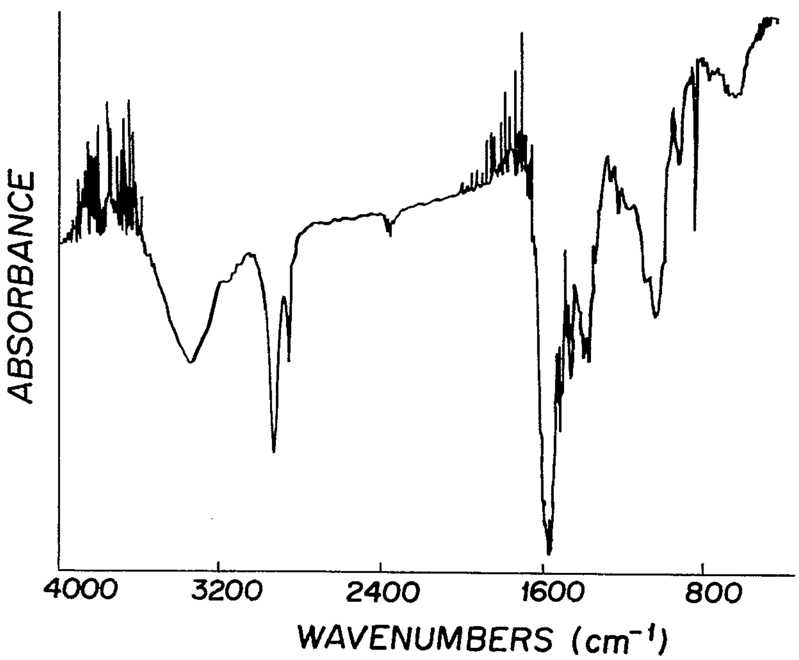

0292306

FIG.7

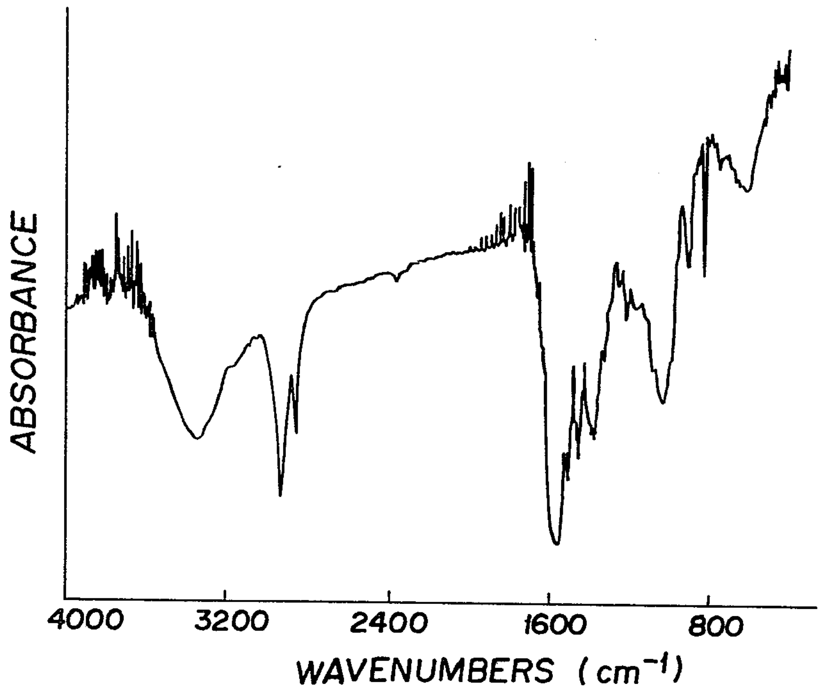


FIG.8

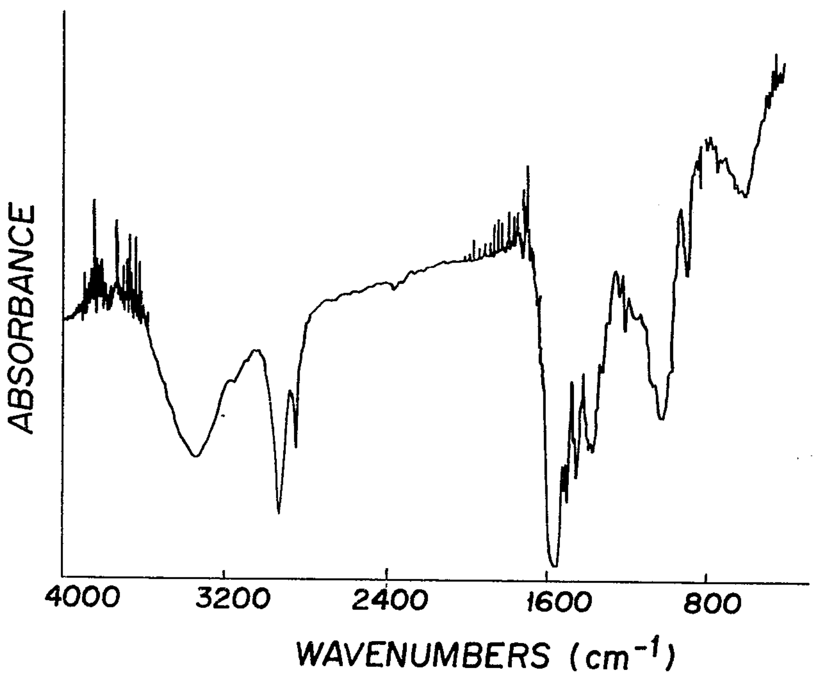

FIG.9

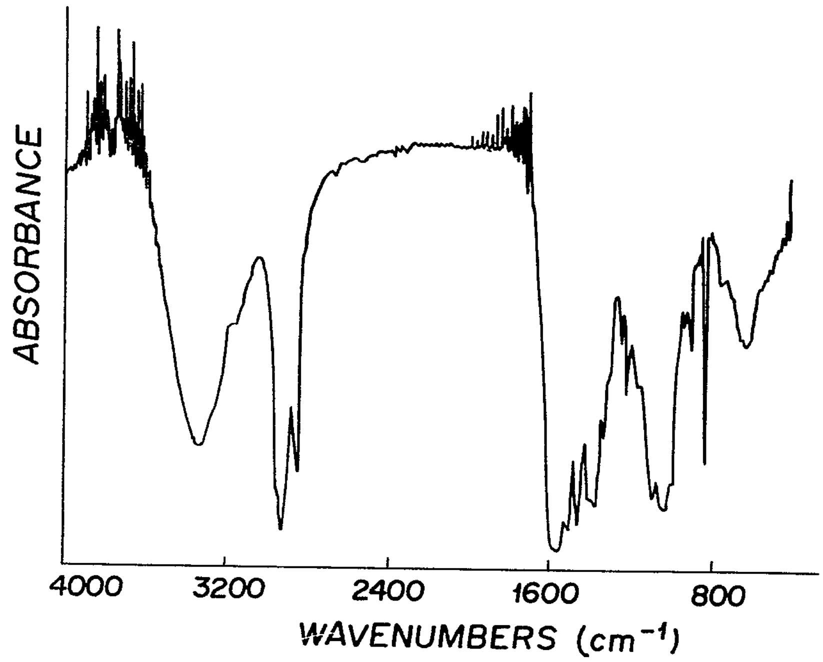

ABSORBANCE
4000
3200
2400
1600
800
WAVENUMBERS (cm⁻¹)


FIG.10

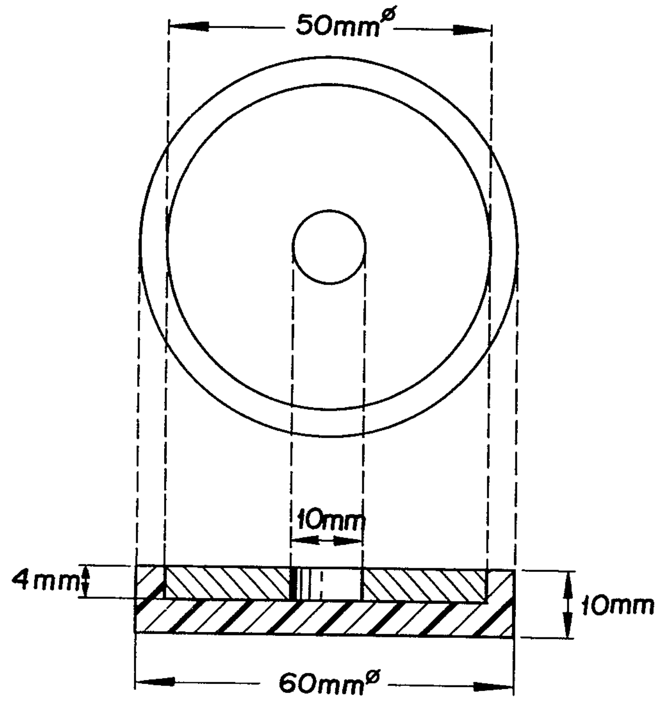

50mmø
10mm
4mm
10mm
60mmø